# EUROPÄISCHE PATENTANMELDUNG

(11) **EP 1 099 896 A2**
(43) Veröffentlichungstag der Anmeldung: **16.05.2001**
(21) Anmeldenummer: 00122135.7
(22) Anmeldetag: 12.10.2000
(51) Int. Cl.: F16L 37/084

(54) **Anordnung zur Verbindung von Fluidleitungen**

(30) Priorität: 10.11.1999 DE 19954165; 28.09.2000 DE 10049231
(71) Anmelder: Georg Fischer Haustechnik AG, 8201 Schaffhausen (CH)
(72) Erfinder: Kaiser, Roland, 78176 Blumberg (DE); Porfido, Erasmo, 8234 Stetten (CH)
(74) Vertreter: Weiss, Wolfgang, Dr.

(57) **Zusammenfassung**

Es wird eine Anordnung zur Verbindung von Fluidleitungen vorgeschlagen, wobei ein Verbindungselement (1) zur Verbindung mit mindestens zwei Fluidleitungen (5,6,7), ein mit einem Leitungsende fest verbindbares Kupplungsgehäuse (9,10,11) und ein Übergangsstück (12,13,14), das den Übergang vom Kupplungsgehäuse zum Verbindungselement bildet, vorgesehen ist, wobei das Übergangsstück (12,13,14) einen Verbindungsbereich (19) zur fluiddichten festen Verbindung mit dem Kupplungsgehäuse (9,10,11) und einen Kupplungsbereich (21) zur fluiddichten austauschbaren und um die Achse der Fluidleitung drehbare Verbindung mit dem Verbindungselement (1) aufweist und wobei zwischen dem Verbindungsbereich (19) und dem Kupplungsbereich (21) einen Übergangsbereich (20) zur lösbaren verrastbaren Verbindung mit dem Verbindungselement (1) angeordnet ist. Die Anordnung kann nachträglich ohne unnötige Zerstörung gelöst und an neuen Verhältnissen angepasst werden und eignet sich für den Einbau mit minimalem Platzbedarf.

## Beschreibung

Die Erfindung bezieht sich auf eine Anordnung zur Verbindung von Fluidleitungen, umfassend ein Verbindungselement zur Verbindung mit mindestens zwei Fluidleitungen, ein mit einem Leitungsende fest verbindbares Kupplungsgehäuse und ein Übergangsstück, das den Übergang vom Kupplungsgehäuse zum Verbindungselement bildet.

Im Anlagenbau, beispielsweise bei Sanitär- und Heizungsanlagen im Bereich Haustechnik, sind Rohrleitungen und Verbindungselemente notwendig um unterschiedlichen Medien zu transportieren. An die Rohrleitungen und die Verbindungselemente werden verschiedenen Anforderungen gestellt. Die Anlage muss eine lange Lebensdauer haben, sie soll möglichst wartungsfrei sein und sie muss einfach installiert werden können. In Sanitär- und Heizungsanlagen soll die Anlage möglichst wenig Platz einnehmen, sie darf den normalen Betriebsablauf nicht stören und muss im Notfall nachträglich einfach bearbeitet werden können.

Aus der EP 846908 A1 ist eine gattungsgemässe Anordnung zur Verbindung von Fluidleitungen bekannt. Ein Leitungsende wird in einem Gehäuse eingeführt und nach der Entspannung einer Druckfeder von einem Klemmring, unlösbar im Gehäuse festgehalten. Der Klemmring, der von der Druckfeder im Gehäuse axial verschoben wird, ist im Gehäuse an dem Ende angeordnet, an dem das Leitungsende eingeführt wird. Das Gehäuse weist an diesem Ende eine konisch zulaufende Innenwand auf. Der Klemmring wird radial zusammen gedruckt und greift mit Verzahnungselementen in der Leitungsaussenwand ein. Das andere Ende des Gehäuses ist, beispielsweise durch Bördeln, fest mit einem Rohrverbindungsstück, beispielsweise ein T-Stück, oder mit einem Ventil, verbunden. Die Verbindung zwischen der Fluidleitung und dem Gehäuse kann nachträglich nicht wieder gelöst werden und kann, einmal befestigt, nicht anders ausgerichtet werden. Eine auf diese Weise mit dem Rohrverbindungsstück einmal verbundene Fluidleitung kann im Notfall nur nach Zerstörung des Verbindungsstückes und der Fluidleitung ausgewechselt werden.

Ausgehend von diesem Stand der Technik ist es Aufgabe der Erfindung, eine Anordnung zur Verbindung von Fluidleitungen anzugeben, die kostengünstig und mit möglichst wenig Arbeitsaufwand auch bei schwierigen Platzverhältnissen hergestellt werden kann und die ohne unnötige Zerstörung einfach lösbar und austauschbar ist.

Diese Aufgabe wird gelöst durch eine Anordnung zur Verbindung von Fluidleitungen umfassend ein Verbindungselement zur Verbindung mit mindestens zwei Fluidleitungen, ein mit einem Leitungsende fest verbindbares Kupplungsgehäuse und ein Übergangsstück, das den Übergang vom Kupplungsgehäuse zum Verbindungselement bildet, wobei das Übergangsstück einen Verbindungsbereich zur fluiddichten festen Verbindung mit dem Kupplungsgehäuse und einen Kupplungsbereich zur fluiddichten austauschbaren und um die Achse der Fluidleitung drehbare Verbindung mit dem Verbindungselement aufweist und dass zwischen dem Verbindungsbereich und dem Kupplungsbereich einen Übergangsbereich zur lösbaren verrastbaren Verbindung mit dem Verbindungselement angeordnet ist.

Bevorzugte Weiterbildungen der Erfindung ergeben sich aus den abhängigen Ansprüchen.

Es ist von Vorteil, dass die Anordnung nachträglich, beispielsweise bei einer Reparatur oder bei einem Umbau, gelöst und ohne unnötige Zerstörung ausgewechselt werden kann. Dies wird dadurch erreicht, dass das Übergangsstück an der Aussenwand des Übergangsbereiches eine ringförmige Nut zur Aufnahme eines dazu passenden Rastmittels aufweist. Dies wird auch dadurch erreicht, dass am Verbindungselement mindestens ein Kupplungsaufnahmebereich zur lösbaren, drehbaren und verrastbaren Aufnahme des Kupplungsbereiches des Übergangsstückes ausgebildet ist, wobei am Verbindungselement mindestens ein Rastmittel zur Verrastung mit der Nut des Übergangsbereiches des Übergangsstückes angeordnet ist.

Es ist auch von Vorteil, dass die Anordnung bei minimalem Platzbedarf und trotzdem gut zugänglich eingesetzt werden kann. Dies wird dadurch erreicht, dass im Kupplungsaufnahmebereich des Verbindungselementes senkrecht zur Fluidleitungsachse zwei parallele Führungseinschnitte zur Führung des senkrecht zur Fluidleitungsachse verschiebbaren Rastmittels angeordnet sind, wobei der Führungseinschnitt durch die Wand des Kupplungsaufnahmebereiches hindurch einen Durchbruch zum Durchlassen des Rastmittels aufweist. Dies wird auch dadurch erreicht, dass das Rastmittel als eine Sicherungsscheibe oder als eine Ω-förmige Rastfeder ausgebildet ist, die in zwei um 180° versetzte Richtungen in den Führungseinschnitten eingeführt werden kann. Die Sicherungsscheibe hat gegenüber der Ω-förmigen Rastfeder zusätzlich noch folgende Vorteile: Der Raumbedarf für das Rastmittel ist kleiner, so dass die zu verbindenden Fluidleitungen dichter zusammen angeordnet werden können und die Anordnung weniger Platz einnimmt. Bei einer federnden Sicherungsscheibe ist die Verletzungsgefahr kleiner als bei einer Ω-förmigen Rastfeder.

Es ist weiter von Vorteil, dass für die Anordnung möglichst wenig Einzelteile hergestellt und an Lager gehalten werden müssen. Dies wird dadurch erreicht, dass das Übergangsstück rotationssymmetrisch und einstückig in einem Drehbearbeitungsverfahren, beispielsweise aus einem Stab oder einem Rohr hergestellt werden kann. Das Übergangsstück, das den Übergang vom Kupplungsgehäuse zum Verbindungselement bildet, ist rotationssymmetrisch und deshalb jederzeit drehbar. Durch diese Drehbarkeit kann das Kupplungsgehäuse in unterschiedlichen Orientierungen mit dem Verbindungselement lösbar verbunden werden, ohne dass dabei die Zugänglichkeit und die Bedienungsfreundlichkeit beeinträchtigt werden.

Es ist weiter auch von Vorteil, dass an die Anordnung nachträglich ohne unnötige Zerstörung und ohne Aufwand für die Anpassung zusätzliche Fluidleitungen mit grösseren oder kleineren Leitungsdurchmessern angeschlossen werden können. Dies wird dadurch erreicht, dass das Übergangsstück als Blindstopfen ausgebildet ist. Dies wird auch dadurch erreicht, dass das Verbindungselement mindestens zwei Fluidleitungen mit unterschiedlichen Durchmessern aufweist.

Ausführungsbeispiele der Erfindung werden anhand der Figuren beschrieben. Es zeigen:
Figur 1 eine Sicht auf eine erfindungsgemässe Anordnung zur Verbindung von Fluidleitungen mit vier unterschiedlichen Übergangsstücken,
Figur 2 eine teilweise geschnittene Sicht auf die Anordnung von Figur 1, teilweise vor und teilweise nach dem Zusammenbau der Anordnung,
Figur 3 einen Schnitt durch die Anordnung von Figur 2,
Figur 4 eine Sicht auf eine weitere erfindungsgemässe Anordnung,
Figur 5 ein zweites Ausführungsbeispiel analog zur Figur 2 und
Figur 6 einen Schnitt durch die Anordnung von Figur 5.

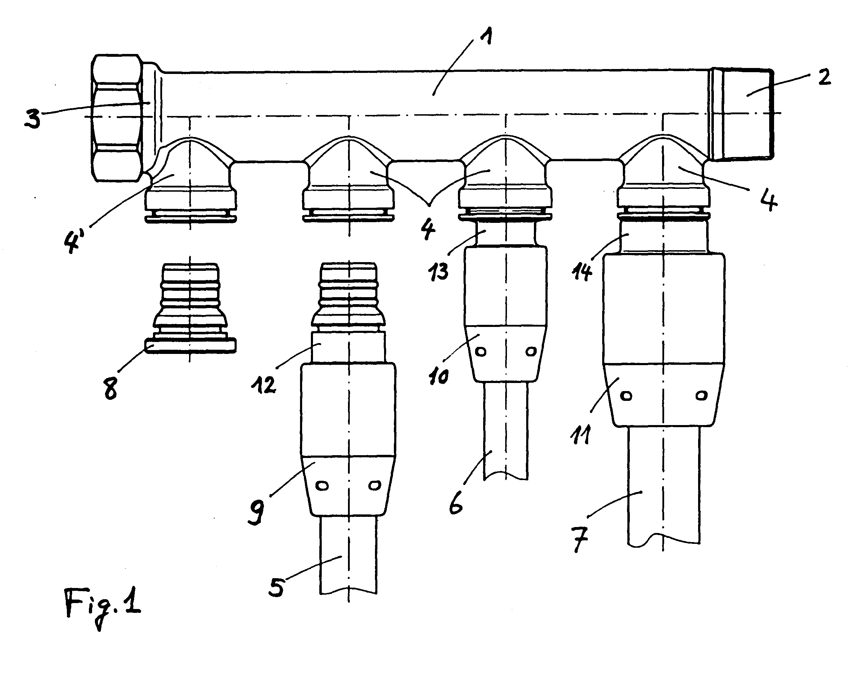

In Figur 1 ist einen Anschlussverteiler, wie dieser beispielsweise für Sanitär- oder Heizungsanlagen verwendet wird, dargestellt. Ein Verbindungselement 1 weist zwei Gewindeanschlüsse 2, 3 auf. Die Gewindeanschlüsse 2, 3 können gleiche oder unterschiedliche Innendurchmesser aufweisen. Wenn die Gewindeanschlüsse komplementär ausgeführt sind, können mehrere kleine Anschlussverteiler zu einer grösseren Verteilerbatterie zusammengesetzt werden.

Das Verbindungselement 1 weist auch vier Kupplungsaufnahmebereiche 4,4' auf, die alle den gleichen Innendurchmesser aufweisen. Das Verbindungselement 1 dient beispielsweise zur wahlweisen Zufuhr von Heisswasser an Verbraucherleitungen 5, 6, 7, die am Anschlussverteiler 1 angeschlossen sind. Die Verbraucherleitungen oder allgemeiner die Fluidleitungen 5,6,7 weisen in Figur 1 unterschiedliche Leitungsdurchmesser auf, sie können jedoch auch alle den gleichen Durchmesser aufweisen. Je nach Einsatzgebiet kann das Verbindungselement 1 an unterschiedlichen Aufgaben angepasst werden. In Figur 1 weisen die Fluidleitungen 5,6,7 von links nach rechts einen mittleren, einen kleineren und einen grösseren Leitungsdurchmesser auf. An dem äusserst linken Kupplungsaufnahmebereich 4' wird keine Fluidleitung, sondern ein Blindstopfen 8 angeschlossen. An der Stelle des Blindstopfens 8 kann nachträglich eine weitere Fluidleitung mit einem beliebigen Leitungsdurchmesser angeschlossen werden. Die Fluidleitungen 5,6,7 sind am Leitungsende alle mit einem Kupplungsgehäuse 9, 10, 11 verbunden. Die Kupplungsgehäuse 9,10,11 werden dem Fluidleitungsdurchmesser entsprechend grösser oder kleiner ausgelegt.

Zwischen den Kupplungsgehäusen 9,10,11, die fest mit den Fluidleitungen 5,6,7 verbindbar sind, und den Kupplungsaufnahmebereichen 4 des Verbindungselementes 1 ist jeweils ein Übergangsstück 12,13,14 angeordnet. Das Übergangsstück 12,13,14 weist auf der Seite der Fluidleitungen 5,6,7 einen unterschiedlichen Durchmesser auf. Auf der Seite des Verbindungselementes 1 weist das Übergangsstück 12,13,14 jeweils einen gleichbleibenden, den Durchmesser des Kupplungsaufnahmebereiches 4 entsprechenden Durchmesser auf. Weil die Übergangsstücke 12,13,14 auf der Seite der Kupplungsgehäuse 9,10,11 unterschiedliche Durchmesser aufweisen, können an dem Verbindungselement 1 Fluidleitungen unterschiedlicher Durchmesser angeschlossen werden. Die Fluidleitungen 5,6,7 sind aus einem Kunststoffmaterial oder aus einem weichen metallischen Material, beispielsweise Kupfer oder eine Cu-Legierung, hergestellt.

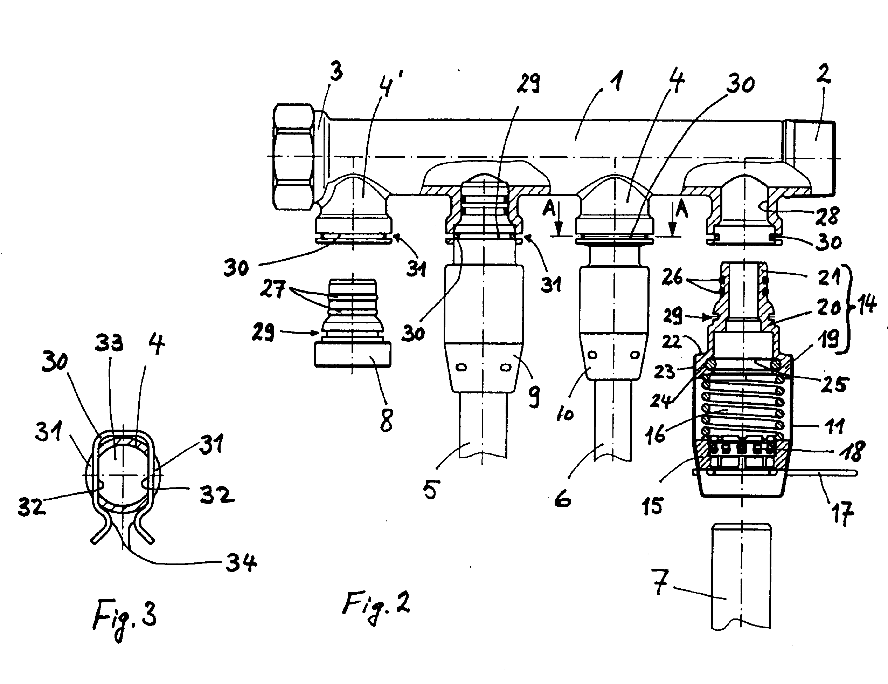

In Figur 2 ist die selbe Anordnung wie in Figur 1 dargestellt. Die Anordnung ist bereichsweise geschnitten dargestellt, um den Zusammenbau und die Funktion der Anordnung erläutern zu können. Das Kupplungsgehäuse 11 und das dazu passende Übergangsstück 14 sind entlang der Mittellinie geschnitten dargestellt. Zwei Kupplungsaufnahmebereiche 4 des Verbindungselementes 1 sind ebenfalls geschnitten dargestellt. Das Kupplungsgehäuse 11 ist eine sogenannte Schnellkupplung für flexible Fluidleitungen. Das Kupplungsgehäuse 11 bildet mit dem Übergangsstück 14 eine Einheit. Diese Einheit wird zur endgültigen nicht lösbaren Verbindung mit den Fluidleitungen 5,6,7 und zur lösbaren verrastbaren Verbindung mit dem Verbindungselement 1 auf der Baustelle angeliefert.

Im Kupplungsgehäuse 11 sind einen Klemmring 15, eine Druckfeder 16 und einen Auslöser 17 dargestellt. Der Auslöser 17 ist ein U-förmiger Haken, der, senkrecht zur Richtung der Achse der Fluidleitung 7 durch Bohrungen in die Wand des Kupplungsgehäuses 11 hindurch angeordnet ist und der den Klemmring 15 unter der Vorspannung, die von der Druckfeder 16 erzeugt wird, hält. Wenn das Leitungsende der Fluidleitung 7 in dem Kupplungsgehäuse 11 eingeführt ist, wird der Auslöser 17 entfernt. Weil das Kupplungsgehäuse 11 auf der Seite der Fluidleitung 7 eine konisch zulaufende Innenwand aufweist, wird der Klemmring 15 radial zusammengedrückt. Der Klemmring 15 greift mit Verzahnungselementen 18 in die Aussenwand der Fluidleitung 7 ein, die aus einem weichen Material besteht. Auf der Seite des Verbindungselementes 1 ist das Kupplungsgehäuse 11 fest mit dem Übergangsstück 14 verbunden.

Das Übergangsstück 14 umfasst einen Verbindungsbereich 19, einen Übergangsbereich 20 und einen Kupplungsbereich 21. Der Verbindungsbereich 19 dient zur fluiddichten und festen Verbindung mit dem Kupplungsgehäuse 11. Der Verbindungsbereich 19 weist hierzu an der Aussenwand eine Schulter 22 auf. Die Aussenwand des Verbindungsbereiches 19 und die Schulter 22 sind derart bemessen und vorbereitet, dass ein Wandteil 23 des Kupplungsgehäuses 11 beispielsweise durch Bördeln fest mit dem Übergangsstück 14 verbunden werden kann. In die Innenwand des Verbindungsbereiches 19 ist eine ringförmige Aussparung 24 ausgebildet, in die ein Dichtelement, beispielsweise eine O-Ringdichtung 25 zur Abdichtung der Fluidleitung 7 aufgenommen werden kann. Der Verbindungsbereich 19 weist einen Innendurchmesser auf, der mit dem Aussendurchmesser der Fluidleitung 7 übereinstimmt.

Der Kupplungsbereich 21 weist auf der Aussenwand zwei Vertiefungen 26 zur Aufnahme von zwei weiteren Dichtelemente, beispielsweise zwei O-Ringdichtungen 27 auf. Die O-Ringdichtungen 27 und die Vertiefungen 26 sind jeweils identisch ausgeführt und in der Richtung der Fluidleitungsachse beabstandet hintereinander angeordnet. Der Kupplungsaufnahmebereich 4 des Verbindungselementes 1 weist an der Innenwand eine zylindrische Dichtfläche 28 auf, die zusammen mit den O-Ringdichtungen 27 des Übergangsstückes 14 eine Führung und eine fluiddichte Kupplung des Übergangsstückes 14 mit dem Verbindungselement 1 ermöglicht. Der Kupplungsbereich 21 weist einen Aussendurchmesser auf, der zu dem Innendurchmesser der Kupplungsaufnahmebereiche 4 des Verbindungselementes 1 passt. In Figur 1 und 2 sind drei Fluidleitungen 5,6,7 mit einem unterschiedlichen Leitungsdurchmesser dargestellt. Die Übergangsstücke 12,13,14 ermöglichen die lösbare und auswechselbare Verbindung von unterschiedlichen Fluidleitungen mit einem Verbindungselement 1.

Im Übergangsbereich 20 des Übergangsstückes 14 ist an der Aussenwand eine weitere ringförmige Nut 29 zur Aufnahme eines dazu passenden Rastmittels 30 ausgebildet. Das Rastmittel 30 ist schematisch im Kupplungsaufnahmebereich 4 des Verbindungselementes 1 dargestellt. In der Aussenwand des Kupplungsaufnahmebereiches 4 sind senkrecht zur Fluidleitungsachse zwei parallele Führungseinschnitte 31 dargestellt. Der Führungseinschnitt 31 ist derart tief in die Wand des Kupplungsaufnahmebereiches 4 eingeschnitten, dass bereichsweise einen Durchbruch 32 gebildet wird. Die Führungseinschnitte 31 dienen zur Führung des Rastmittels 30 beim Verrastungs- und Entrastungsvorgang. Wenn das Übergangsstück 14 vollständig in dem Kupplungsaufnahmebereich 4 eingeführt ist, wirkt das Rastmittel 30 durch die Durchbrüche 32 hindurch mit der Nut 29 am Übergangsbereich 20 des Übergangsstückes 14 unter Bildung einer verrastbaren und lösbaren Verbindung zusammen. Das Übergangsstück 14 ist einstückig und rotationssymmetrisch ausgebildet. Es ist beispielsweise als einem Drehteil aus Kupfer oder aus einer Cu-Legierung hergestellt.

In Figur 3 ist einen Schnitt durch einen Kupplungsaufnahmebereich 4 entlang einer Linie AA von Figur 2 dargestellt. Aus Figur 3 ist gut ersichtlich, wie das Rastmittel im wesentlichen als eine Ω-förmige Rastfeder 30 ausgebildet ist. Die Ω-förmige Rastfeder 30 greift mit den längeren Seiten durch die Durchbrüche 32 hindurch in der Aufnahmeöffnung 33 des Kupplungsaufnahmebereiches 4 ein und greift, wenn die Nut 29 mit den Durchbrüchen 32 in den Führungseinschnitten 31 in Deckung gebracht wird, in die Nut 29 des Übergangsstückes 14 ein. Beim Einführen des Übergangsstückes 14 wird die Ω-förmige Rastfeder 30 leicht angespannt, wird dabei nach aussen gedrückt und gibt somit die Aufnahmeöffnung 33 für den Kupplungsbereich 21 frei. Wenn das Übergangsstück 14 vollständig in den Kupplungsaufnahmebereich 4 eingeführt ist, rasten die längeren Seiten der Ω-förmigen Rastfeder 30 in die Nut 29 ein. Die Führungseinschnitte 31 sind derart bemessen, dass die Ω-förmige Rastfeder 30 nicht im Bereich der O-Ringdichtungen 27 hineinragt. Hiermit wird beim Ein- und Ausführen des Übergangsstückes 14 eine Beschädigung der O-Ringdichtungen 27 verhindert.

Einmal eingerastet, kann das Übergangsstück 14 nicht mehr einfach von dem Verbindungselement 1 getrennt werden. Zum Trennen der Verbindung muss das Rastmittel 30 in die Führungseinschnitte 31 senkrecht zur Fluidleitungsachse in eine Freigabestellung verschoben werden, in die der Kupplungsbereich 21 des Übergangsstückes 14 von dem Verbindungselement 1 in der Richtung der Fluidleitungsachse gelöst werden kann. In der Freigabestellung stützen die schmalsten Stellen 33 der Ω-förmigen Rastfeder 30 im Bereich der Führungseinschnitte 31 auf die Wand des Kupplungsaufnahmebereiches 4 ab. Wenn die Ω-förmige Rastfeder 30 die Freigabestellung einmal erreicht hat, wird diese Freigabestellung von der Ω-förmigen Rastfeder 30 auch eingehalten, weil die Führungseinschnitte 31 in die Wand des Kupplungsaufnahmebereiches 4 eine spezielle Ausbildung in Übereinstimmung mit der Ausbildung der Ω-förmigen Rastfeder 30 aufweisen.

Der Winkel und die Auflagefläche am Anfang des Führungseinschnttes 31 sind so ausgelegt, dass die schmalste Stelle der Ω-förmigen Rastfeder 30 in der Freigabestellung gehalten wird. Wenn die Rastfeder 30 von der Freigabestellung in die Raststellung von Figur 3 zurückgeschoben wird, kann wieder eine verrastbare lösbare Verbindung mit einem beliebigen Kupplungsgehäuse 12,13,14 hergestellt werden.

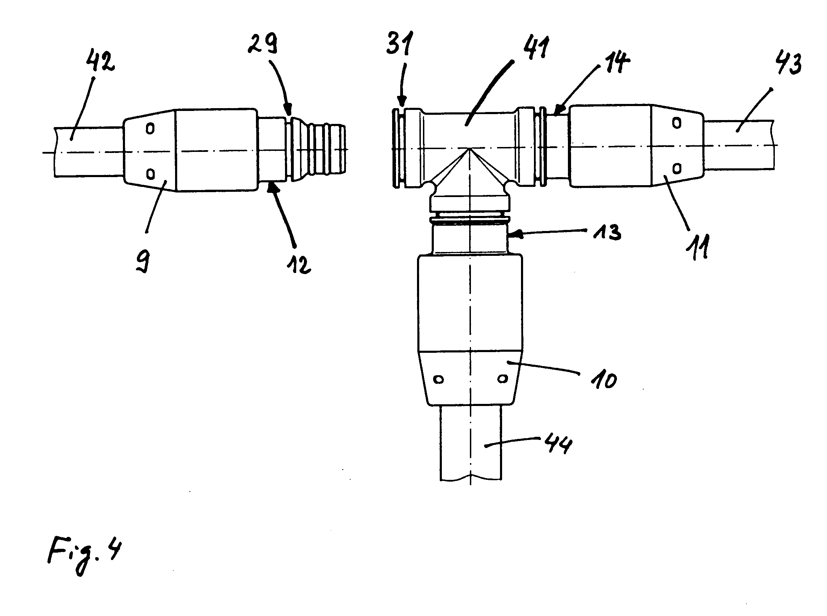

In Figur 4 ist ein zweites Ausführungsbeispiel einer Anordnung zur Verbindung von Fluidleitungen dargestellt. In Figur 4 ist statt dem Anschlussverteiler 1 von Figur 1 und 2 ein T-förmiger Leitungsverbinder 41 zur Verbindung mit drei Fluidleitungen 42,43,44 dargestellt. Die Fluidleitungen 42, 43, 44 können beliebige Durchmesser aufweisen.

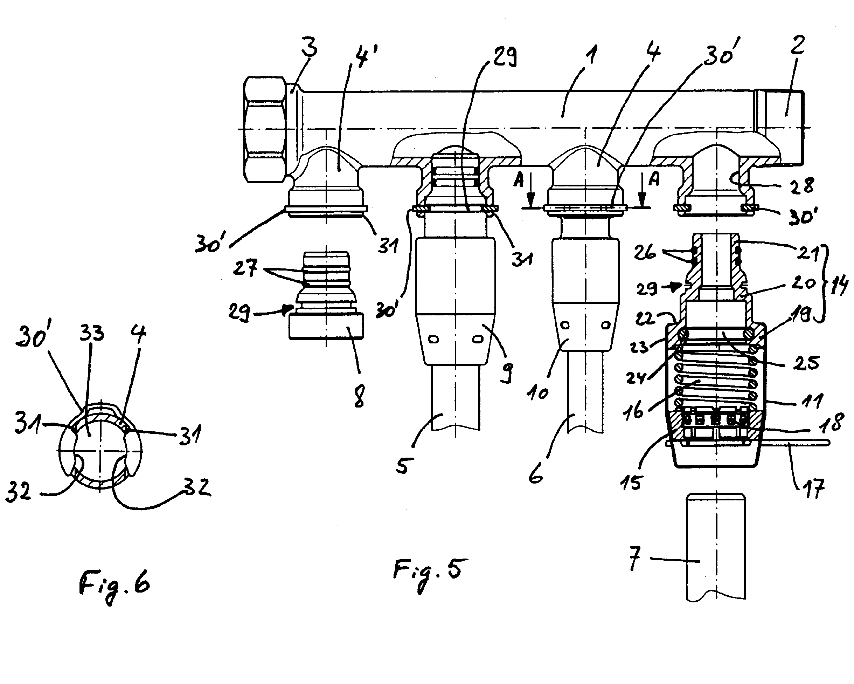

In den Figuren 5 und 6 ist ein zweites Ausführungsbeispiel des Rastmittels 30 dargestellt. Das Rastmittel ist hier im Gegensatz zur Ω-förmigen Rastfeder als eine Sicherungsscheibe 30' ausgebildet. Die Sicherungsscheibe 30' hat die gleiche Aufgabe und wirkt in der gleichen Art und Weise wie die Ω-förmige Rastfeder. Die Sicherungsscheibe 30' bietet gegenüber der Ω-förmigen Rastfeder zusätzlich folgende Vorteile: Die Sicherungsscheibe ist kleiner als die Ω-förmige Rastfeder. Dadurch können die Fluidleitungen 5,6,7 auf einem engeren Raum am Anschlussverteiler 1 angeordnet werden, oder, wenn dies nicht erforderlich ist, bleibt beim Zusammenbau für die Betätigung mehr Zwischenraum frei. Durch die kompaktere und einfachere Ausgestaltung der Sicherungsscheibe 30' wird zusätzlich die Verletzungsgefahr, die bei der Ω-förmigen Rastfeder vorhanden sein könnte, beseitigt. Die Sicherungsscheibe 30' ist ähnlich ausgebildet, wie eine Sicherung, die auch für drehende Naben oder Wellen angewendet wird. Die Sicherungsscheibe 30' ist jedoch wesentlich kleiner als einer handelsüblichen Wellen- oder Nabensicherung und ist im Gegensatz hierzu aus rostfreiem Federstahl statt aus einer handelsüblichen Eisenlegierung hergestellt.

Die Anordnung ermöglicht eine schnelle und einfache Montage und Demontage von fluiddichten Leitungen, auch an schwer zugänglichen Stellen. Das Rastmittel 30 kann in zwei Richtungen, die um 180° zueinander versetzt sind, in die Führungseinschnitte 31 eingeführt werden. Somit kann das selbe Verbindungselement 1, das einen rechten Gewindeanschluss 2 und einen linken Gewindeanschluss 3 aufweist, in beiden Richtungen parallel und möglichst benachbart zu einer Installationswand installiert werden. Hiermit wird erreicht, dass nur eine Ausführung des Verbindungselementes 1 an Lager gehalten werden muss und dass auch bei eingeschränkten Platzverhältnissen eine leichte Montage und Demontage der Anordnung möglich ist. Die Montage wird auch dadurch erleichtert, dass das Übergangsstück 12,13,14 drehbar und verrastbar mit dem Verbindungselement 1 verbunden ist. Im Notfall, beispielsweise bei einer notwendigen Reparatur, muss lediglich die defekte Fluidleitung 5,6,7 zusammen mit dem Kupplungsgehäuse 9,10,11 und dem Übergangsstück 12,13,14 abgekoppelt und ersetzt werden.

Bei den bisherigen Installationen, ohne dem Übergangsstück 12,13,14, waren die Fluidleitungen 5,6,7, einmal mit dem Kupplungsgehäuse 9,10,11 verbunden, fest und unverdrehbar, d.h. nicht mehr frei orientierbar, mit dem Verbindungselement 1 verbunden. Deshalb musste, im Falle einer Reparatur oder einer Änderung der Fluidleitungen 5,6,7, die gesamte Anlage, bestehend aus dem Verbindungselement 1 mit den Kupplungsaufnahmebereichen 4 und den Kupplungsgehäusen 9,10,11, zerstört und ersetzt werden. Somit werden mit der neuen verrastbaren, lösbaren und auswechselbaren Anordnung erhebliche Einsparungen an Material- und Installationskosten erreicht. Konventionelle Anordnungen zur Verbindung von Fluidleitungen, die verschraubt werden, sind schwerer, brauchen mehr Platz und verlangen einen grösseren Arbeitsaufwand als eine Steckkupplung.

## Patentansprüche

1. Anordnung zur Verbindung von Fluidleitungen umfassend ein Verbindungselement (1) zur Verbindung mit mindestens zwei Fluidleitungen, ein mit einem Leitungsende fest verbindbares Kupplungsgehäuse (9,10,11) und ein Übergangsstück (12,13,14), das den Übergang vom Kupplungsgehäuse zum Verbindungselement bildet, dadurch gekennzeichnet, dass das Übergangsstück (12,13,14) einen Verbindungsbereich (19) zur fluiddichten festen Verbindung mit dem Kupplungsgehäuse (9,10,11) und einen Kupplungsbereich (21) zur fluiddichten austauschbaren und um die Achse der Fluidleitung drehbare Verbindung mit dem Verbindungselement (1) aufweist, und dass zwischen dem Verbindungsbereich (19) und dem Kupplungsbereich (21) ein Übergangsbereich (20) zur lösbaren verrastbaren Verbindung mit dem Verbindungselement (1) angeordnet ist.

2. Anordnung zur Verbindung von Fluidleitungen nach Anspruch 1, dadurch gekennzeichnet, dass das Übergangsstück (12,13,14) an der Innenwand des Verbindungsbereiches (19) mindestens eine ringförmige Aussparung (24) zur Aufnahme eines Dichtelementes, beispielsweise einer O-Ringdichtung (25), zur Abdichtung einer Fluidleitung (5,6,7) aufweist.

3. Anordnung zur Verbindung von Fluidleitungen nach dem Anspruch 1 oder 2, dadurch gekennzeichnet, dass das Übergangsstück (12,13,14) an der Aussenwand des Verbindungsbereiches (19) eine Schulter (22) zum Aufbördeln eines Wandteiles (23) des Kupplungsgehäuses (9,10,11) aufweist.

4. Anordnung zur Verbindung von Fluidleitungen nach einem der Ansprüche 1 bis 3, dadurch gekennzeichnet, dass das Übergangsstück (14) an der Aussenwand des Übergangsbereiches (20) eine ringförmige Nut (29 ) zur Aufnahme eines dazu passenden Rastmittels (30) aufweist.

5. Anordnung zur Verbindung von Fluidleitungen nach einem der Ansprüche 1 bis 4, dadurch gekennzeichnet, dass das Übergangsstück (12,13,14) im Kupplungsbereich (21) mindestens zwei identisch ausgebildete und in der Richtung der Fluidleitungsachse beabstandet angeordnete Vertiefungen (26) zur Aufnahme von dazu passenden weiteren Dichtelementen, beispielsweise O-Ringdichtungen (27) aufweist.

6. Anordnung zur Verbindung von Fluidleitungen nach einem der Ansprüche 1 bis 5, dadurch gekennzeichnet, dass das Übergangsstück (12,13,14) rotations-symmetrisch und einstückig in einem Drehbearbeitungsverfahren herstellbar ist.

7. Anordnung zur Verbindung von Fluidleitungen nach einem der Ansprüche 1 bis 6, dadurch gekennzeichnet, dass am Verbindungselement (1) mindestens ein Kupplungsaufnahmebereich (4,4') zur lösbaren, drehbaren und verrastbaren Aufnahme des Kupplungsbereiches (21) des Übergangsstückes (12,13,14) ausgebildet ist.

8. Anordnung zur Verbindung von Fluidleitungen nach einem der Ansprüche 1 bis 7, dadurch gekennzeichnet, dass der Kupplungsaufnahmebereich (4) an der Innenwand eine zylindrische Dichtfläche (28) zur fluiddichten Führung der O-Ringdichtungen (27) des Kupplungsbereiches (21) aufweist.

9. Anordnung zur Verbindung von Fluidleitungen nach einem der Ansprüche 1 bis 8, dadurch gekennzeichnet, dass am Verbindungselement (1) mindestens ein Rastmittel (30) zur Verrastung mit der Nut (29) des Übergangsbereiches (20) des Übergangsstückes (12,13,14) angeordnet ist.

10. Anordnung zur Verbindung von Fluidleitungen nach einem der Ansprüche 1 bis 9, dadurch gekennzeichnet, dass am Verbindungselement (1) im Kupplungsaufnahmebereich (4) senkrecht zur Fluidleitungsachse zwei parallele Führungseinschnitte (31) zur Führung des senkrecht zur Fluidleitungsachse verschiebbaren Rastmittels (30) ausgebildet sind, wobei der Führungseinschnitt (31) durch die Wand des Kupplungsaufnahmebereiches (4) hindurch einen Durchbruch (32) zum Durchlassen des Rastmittels (30) aufweist.

11. Anordnung zur Verbindung von Fluidleitungen nach einem der Ansprüche 1 bis 10, dadurch gekennzeichnet, dass das Rastmittel als eine Sicherungsscheibe (30') oder eine Ω-förmige Rastfeder (30) ausgebildet ist, die in zwei um 180° versetzte Richtungen in den Führungseinschnitten (31) geführt werden kann.

12. Anordnung zur Verbindung von Fluidleitungen nach einem der Ansprüche 1 bis 11, dadurch gekennzeichnet, dass das Rastmittel (30, 30') in die Führungseinschnitte (31) von einer ersten Stellung in eine zweite Stellung derart verschiebbar angeordnet ist, dass in der ersten Stellung des Rastmittels (30,30') der Kupplungsbereich (21) des Übergangsstückes (14) in dem Kupplungsaufnahmebereich (4) des Verbindungselementes (1) lösbar eingebracht werden kann und dass das Rastmittel (30) in der zweiten Stellung durch die Durchbrüche (32) in die Nut (29) im Übergangsbereich (20) des Übergangsstückes (14) unter Bildung einer fluiddichten, drehbaren und wieder lösbaren Verbindung des Übergangsstückes (14) mit dem Verbindungselement (1) einrastet.

13. Anordnung zur Verbindung von Fluidleitungen nach einem der Ansprüche 1 bis 12, dadurch gekennzeichnet, dass das Übergangsstück (14) als Blindstopfen (8) ausgebildet ist.

14. Anordnung zur Verbindung von Fluidleitungen nach einem der Ansprüche 1 bis 13, dadurch gekennzeichnet, dass das Verbindungselement (1) mindestens mit zwei Fluidleitungen unterschiedlicher Durchmesser verbindbar ist.

15. Anordnung zur Verbindung von Fluidleitungen nach einem der Ansprüche 1 bis 14, dadurch gekennzeichnet, dass die Fluidleitungen (5,6,7) aus einem Kunststoffmaterial oder aus einem weichen metallischen Material hergestellt sind.
